# EUROPEAN PATENT APPLICATION

(11) **EP 3 892 446 A1**
(43) Date of publication of application: **13.10.2021**
(21) Application number: 20168611.0
(22) Date of filing: 08.04.2020
(51) Int. Cl.: B29C 64/124, B29C 64/245

(54) **BUILDING PLATE ASSEMBLY FOR USE IN AN ADDITIVE MANUFACTURING APPARATUS**

(71) Applicant: DENTSPLY SIRONA Inc., York, PA 17401 (US); Sirona Dental Systems GmbH, 64625 Bensheim (DE)
(72) Inventor: Stahl, Christian, 64625 Bensheim (DE); Brandes, Christoph, 64625 Bensheim (DE)
(74) Representative: Özer, Alpdeniz

(57) **Abstract**

The present invention provides a building plate assembly (1) for use in an additive manufacturing apparatus comprising means for additively manufacturing a component (2) through curing photocurable resin, the building plate assembly (1) comprising: a building plate (3) having a front surface (3a) on which said component (2) can be attached during the additive manufacturing; a plurality of through holes (3b) formed between the rear surface (3c) and the front surface (3a) of the building plate (3); characterized by further comprising: a detachment means (4) having one or more projections (4a) which can be relatively moved towards the rear surface (3c) and into the through-holes (3b) to detach the component (2) from the front surface (3a) and, retracted to at least partly clear the through-holes (3b).

## Description

### TECHNICAL FIELD OF THE INVENTION

The present invention relates to an additive manufacturing apparatus. The present invention more particularly relates to the building plate of the additive manufacturing apparatus.

### BACKGROUND ART OF THE INVENTION

In additive manufacturing techniques, such as stereolithography (SLA) or digital light processing (DLP), a three dimensional component is printed layer-by-layer through light-based curing of a liquid printing medium i.e., a liquid photocurable resin, which is selectively cured under the influence of UV radiation. In a commonly known variation of additive manufacturing, the 3D components are preferably pulled by means of a building plate, upside-down out of the liquid photocurable material filled in a vat. Other variations of additive manufacturing are also known to those skilled in the art.

A commonly known problem in the additive manufacturing is that after 3D printing, the printed 3D component (hereinafter referred to as component) must be removed from the building plate. This is typically done with a spatula. Thus, the removal process is not very comfortable to handle and can cause injury to the user if the sharp-edged spatula slips off. Another commonly known problem in the additive manufacturing is that the adhesion between the printing film, the resin and the building plate may create large forces, especially for a building plate with large surface area, when pulling the building plate away from the printing film in the vat. Building plates with honeycomb like structure are commonly used to reduce the surface area of the building plate and thus the resulting adhesion. However, the open honeycombs are usually partially filled with resin during the 3D printing, which hardens in the honeycombs, making it even more difficult to remove the component. Moreover, the honeycombs must then be laboriously cleaned.

### DISCLOSURE OF THE INVENTION

An objective of the present invention is to overcome the problems of the prior art and provide a building plate assembly for use in an additive manufacturing apparatus.

This objective has been achieved through the building plate assembly as defined in claim 1. The dependent claims relate to further embodiments and developments.

The present invention provides a building plate assembly for use in an additive manufacturing apparatus comprising means for additively manufacturing a component through curing photocurable resin. The building plate assembly comprises: a building plate having a front surface on which said component can be attached during the additive manufacturing; a plurality of through holes formed between the rear surface and the front surface of the building plate; and a detachment means having one or more projections which can be relatively moved towards the rear surface and into the through-holes to detach the component from the front surface and, retracted to at least partly clear/evacuate the through-holes.

A major advantageous effect of the present invention is that through the detachment means the component can be easily detached from the front surface of the building plate, without the need of using a spatula or the like and thus the risk of injury can be eliminated. Another major advantageous effect of the present invention is that through the detachment means the through holes in the building plate can be simultaneously pierced free from resin during the detachment of the component, and thus the user can immediately obtain a clean building plate again after completion of the detachment. Thus, the detachment of the component and the cleaning of the honeycomb structure can be safely and easily achieved in a single step by pressing the projections into the through holes. Another major advantageous effect of the present invention is that thanks to the through-holes of the building plate the adhesion can be reduced during the pulling of the building plate away from the printing film, and thus the 3D printing can be improved.

According to the present invention, the detachment means is provided like a negative form of the building plate to allow pressing the resin out of the through-holes. Therefore, in an embodiment, the detachment means has a detachment plate which is arranged relatively movable within a gap behind the rear surface of the building plate. And the projections are arranged on the detachment plate at a plurality of positions corresponding to the through-holes respectively. The building plate and the detachment plate are preferably substantially parallel and separated through a substantially constant gap. The building plate and the detachment plate have preferably substantially the same size such that the through holes and the projections can be substantially uniformly arranged over their entire areas respectively. The through-holes and the corresponding projections preferably have complementary shapes with sufficiently small clearance for allowing the relative movement. The through-holes and the corresponding projections may have various different shapes of cross sections. The cross-section may be circular, oval or polygonal. The through-holes and the corresponding projections may have also tapered shapes.

According to the present invention, the detachment plate and building plate have a retracted state and a compressed state. It is preferable that the in the retracted state the projections are either completely outside or, alternatively, remain only partially inside the through holes such that the front section of the through holes are cleared and can effectively reduce the adhesion during the 3D printing. It is also preferable that in the compressed state either the tips of the projections are at least partially inside the through holes, or leveled with the front surface, or even protrude out of the front surface so that the detachment process can be securely affected.

According to the present invention, the detachment means is preferably biased from the compressed state towards the retracted state. Therefore, in an embodiment, the detachment means comprises a resilient means for biasing the detachment plate away from the rear surface of the building plate to clear the through holes at least partially. The resilient means preferably comprises one or more compression springs arranged between the detachment plate and the building plate. Alternatively, one or more leaf springs or the like may be used.

According to the present invention, the detachment means preferably comprises a guiding means for stably guiding the detachment plate relative to the building plate during the movement between the compressed state and the retracted state. The guiding means also limits their relative positions of the detachment plate and the building plate so that an undesired disassembly thereof can be prevented.

According to the present invention, the building plate assembly preferably has a mounting means for releasably mounting the building plate into the additive manufacturing apparatus. The mounting/unmounting operation is preferably conducted through a motorized automated mechanism. Alternatively, the mounting/unmounting operation may be conducted manually. Thus, the building plate assembly and the component can be unmounted for treatment in a post processing unit. In an embodiment, the mounting means is preferably disposed on the detachment means, more preferably on the detachment plate. During the 3D printing, the detachment plate and the building plate may be fixed by means of a locking/unlocking means relative to each other to prevent relative movement. Alternatively, the mounting means may be disposed on the rear side of the building plate.

According to the present invention, the detachment means is preferably solely hand-driven by the user. Alternatively, the detachment means may be provided with a motorized actuator that is built into the building plate assembly for pressing/retracting the projections into/out of the through holes.

The present invention also provides an additive manufacturing apparatus which comprises the building plate assembly. After the 3D printing, the building plate assembly can be unmounted from the additive manufacturing apparatus. The building plate assembly can be detachably mounted into a post processing unit for washing/drying/curing. The user can perform the washing step of the building plate assembly together with the component in the post processing unit. Thereafter, the user can manually press the detachment plate against the negative building plate to detach the component attached on its front surface. Alternatively, the motorized actuator may be used for initiating the detachment process. The building plate assembly may be also battery driven and/or connectable to a power source in the post processing unit and in the additive manufacturing apparatus for supplying power to the motorized actuator.

### BRIEF DESCRIPTION OF THE DRAWINGS

In the subsequent description, further aspects and advantageous effects of the present invention will be described in more detail by using exemplary embodiments and by referring to the drawings, wherein
Fig. 1 - is a schematic vertical sectional partial view of a building plate assembly according to an embodiment of the present invention;
Fig. 2 - is a schematic vertical sectional partial view of a building plate assembly according to an alternative embodiment of the present invention;
Fig. 3 - is a schematic enlarged detailed view of the region A of the building plate assembly of Fig. 1, when the projections have been relatively moved into the through holes during the detachment process.
Fig. 4 - is a schematic enlarged detailed view of a region A of the building plate assembly according to an alternative embodiment, when the projections have been relatively moved into the through holes during the detachment process.

The reference numbers shown in the drawings denote the elements as listed below and will be referred to in the subsequent description of the exemplary embodiments:
1. Building plate assembly
2. Component
3. Building plate
   3a. Front surface
   3b. Through hole
   3c. Rear surface
4. Detachment means
   4a. Projections
   4b. Detachment plate
   4c. Resilient means
   4d. Spring
   4e. Guiding means
5. Mounting means

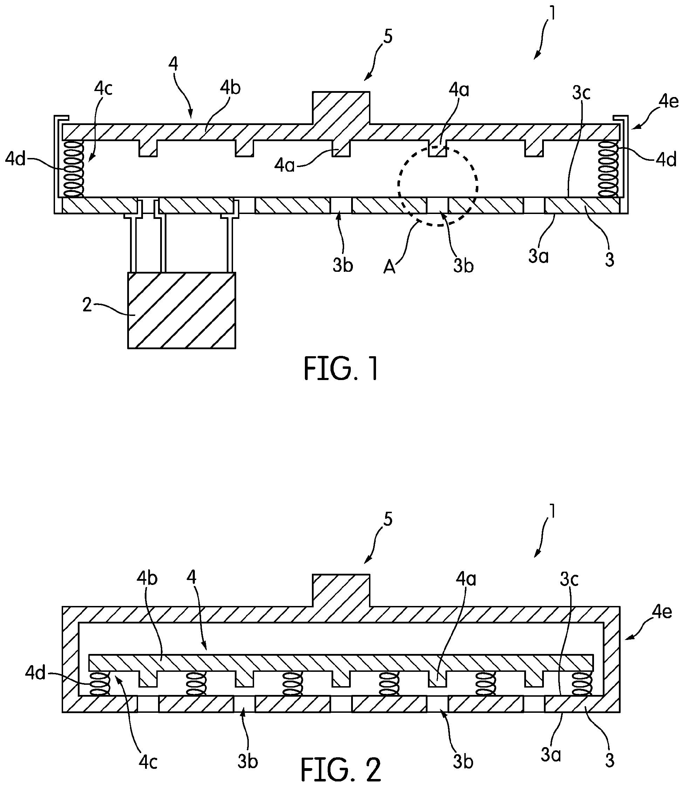

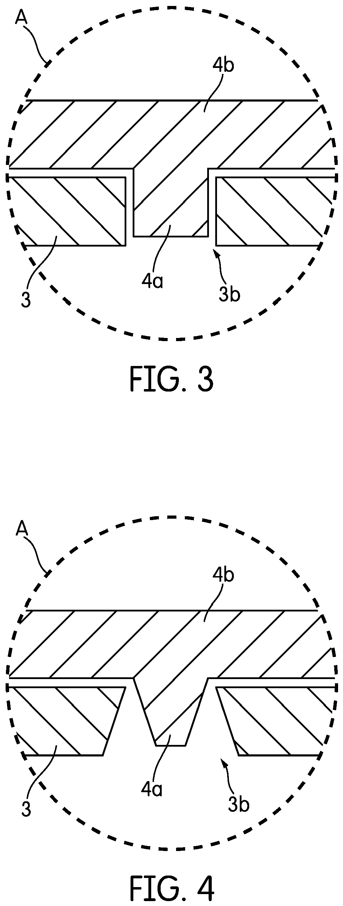

Fig. 1 and Fig. 2 show alternative embodiments of a building plate assembly (1) which is suitable for use in an additive manufacturing apparatus that comprises means for additively manufacturing a component (2) through curing photocurable resin. The present invention also provides an additive manufacturing apparatus that comprises the building plate assembly (1). As shown in Fig. 1 and 2, the building plate assembly (1) comprises: a building plate (3) having a front surface (3a) on which said component (2) can be attached during the additive manufacturing; a plurality of through holes (3b) formed between the rear surface (3c) and the front surface (3a) of the building plate (3); and a detachment means (4) having a plurality of projections (4a) which can be relatively moved towards the rear surface (3c) and into the through-holes (3b) to detach the component (2) from the front surface (3a) and, retracted to clear the through-holes (3b). In Fig. 1 and Fig. 2, the detachment means (4) is shown in the retracted state where the through-holes (3b) are completely cleared from the projections (4a). The 3D printing process can be performed in the retracted state. The detachment means (4) comprises: a detachment plate (4b) which is arranged relatively movable within a gap behind the rear surface (3c) of the building plate (3). The projections (4a) are arranged on the detachment plate (4b) at a plurality of positions corresponding to the through-holes (3b) respectively. The projections (4a) are outside the through holes (3b) in the retracted state. The building plate (3) and the detachment plate (4b) are substantially parallel and separated through the gap. The building plate (3) and the detachment plate (4b) have substantially the same size. As shown in Fig.3, the tips of the projections (4a) are shortly before becoming leveled with the front surface (3a) as the furthest moved position is approached i.e., the compressed state. The detachment means (4) comprises: a resilient means (4c) for biasing the detachment plate (4b) away from the rear surface (3c) of the building plate (3) i.e., from the compressed state to the retracted state. The resilient means (4c) comprises one or more compression springs (4d) arranged between the detachment plate (4b) and the building plate (3). The detachment means (4) comprises: a guiding means (4e) for stably guiding the detachment plate (4b) relative to the building plate (3) and limiting their relative positions. The building plate assembly (1) comprises a mounting means (5) for releasably mounting the building plate (3) into the additive manufacturing apparatus. As shown in Fig.1, the mounting means (5) is disposed on the detachment means (4), in particular on the detachment plate (4b). During the 3D printing, the building plate (3) and the detachment plate (4b) can be relatively fixed through a locking means to prevent relative movement such as oscillations and the like. In the alternative embodiment as shown in Fig. 2, the mounting means (5) is disposed on the rear side of the building plate (3). As shown in Fig. 2, mounting means (5) and the building plate (3) are connected via the guiding means (4e). As shown in Fig.3, the through-holes (3b) and the corresponding projections (4a) have complementary shapes with sufficiently small clearance for allowing the relative movement. The through-holes (3b) and the corresponding projections (4a) may have circular, oval or polygonal cross sections. As shown in an alternative embodiment in Fig.4, the through-holes (3b) are tapered towards the rear surface (3c) and the corresponding projections (4a) are tapered towards the front surface (3a). In both alternative embodiments in Fig. 1 and Fig. 2, the detachment means (4) can be solely hand-driven by the user: After the 3D printing, the building plate assembly (1) can be unmounted from the additive manufacturing apparatus. The user can perform the washing step of the building plate assembly (1) and the component (2) as usual in a separate post processing unit. Thereafter, the user can press manually the detachment plate (4b) against the negative building plate (3) to detach the component (2). In an alternative embodiment (not shown), the detachment means (4) has a motorized actuator which is adapted to move the projections (4a) relatively into the through holes (3b) so as to detach the component (2).

## Claims

1. A building plate assembly (1) for use in an additive manufacturing apparatus comprising means for additively manufacturing a component (2) through curing photocurable resin, the building plate assembly (1) comprising:
a building plate (3) having a front surface (3a) on which said component (2) can be attached during the additive manufacturing;
a plurality of through holes (3b) formed between the rear surface (3c) and the front surface (3a) of the building plate (3);
**characterized by** further comprising:
a detachment means (4) having one or more projections (4a) which can be relatively moved towards the rear surface (3c) and into the through-holes (3b) to detach the component (2) from the front surface (3a) and, retracted to at least partly clear the through-holes (3b).

2. The building plate assembly (1) according to claim 1, **characterized in that** the detachment means (4) comprises: a detachment plate (4b) which is arranged relatively movable within a gap behind the rear surface (3c) of the building plate (3), wherein the projections (4a) are arranged on the detachment plate (4b) at a plurality of positions corresponding to the through-holes (3b) respectively.

3. The building plate assembly (1) according to claim 2, **characterized in that** the detachment plate (4b) and the building plate (3) are substantially parallel and separated through the gap.

4. The building plate assembly (1) according to any one of claims 2 or 3, **characterized in that** the detachment plate (4b) and the building plate (3) have substantially the same size.

5. The building plate assembly (1) according to any one of claims 1 to 4, **characterized in that** the projections (4a) are outside or partially inside the through holes (3b) in the retracted position, and wherein the tips of the projections (4a) are either partially inside the through holes (3b), leveled with the front surface (3a) or protruded from the front surface (3a) in the furthest moved position.

6. The building plate assembly (1) according to any one of claims 2 to 5, **characterized in that** the detachment means (4) comprises: a resilient means (4c) for biasing the detachment plate (4b) away from the rear surface (3c) of the building plate (3).

7. The building plate assembly (1) according to claim 6, **characterized in that** the resilient means (4c) comprises one or more compression springs (4d) arranged between the detachment plate (4b) and the building plate (3).

8. The building plate assembly (1) according to any one of claims 2 to 7, **characterized in that** the detachment means (4) comprises: a guiding means (4e) for stably guiding the detachment plate (4b) relative to the building plate (3) and limiting their relative positions.

9. The building plate assembly (1) according to any one of claims 1 to 8, **characterized by** further comprising: a mounting means (5) for releasably mounting the building plate (3) into the additive manufacturing apparatus.

10. The building plate assembly (1) according to claim 9, **characterized in that** the mounting means (5) is disposed on the detachment means (4).

11. The building plate assembly (1) according to claim 10, where dependent on claim 2, **characterized in that** the mounting means (5) is disposed on the detachment plate (4b) or the rear side of the building plate (3).

12. The building plate assembly (1) according to any one of claims 1 to 11, **characterized in that** the through-holes (3b) and the corresponding projections (4a) have complementary shapes with sufficiently small clearance for allowing the relative movement.

13. The building plate assembly (1) according to any one of claims 1 to 12, **characterized in that** the through-holes (3b) and the corresponding projections (4a) have circular, oval or polygonal cross sections.

14. The building plate assembly (1) according to any one of claims 1 to 13, **characterized in that** the through-holes (3b) are tapered towards the rear surface (3c) and/or the corresponding projections (4a) are tapered towards the front surface (3a).

15. The building plate assembly (1) according to any one of claims 1 to 14, **characterized in that** the detachment means (4) has a motorized actuator which is adapted to move the projections (4a) relatively into the through holes (3b) so as to detach the component (2).

16. The building plate assembly (1) according to any one of claims 1 to 15, **characterized in that** detachment means (4) can be solely hand-driven by the user.

17. An additive manufacturing apparatus comprising the building plate assembly (1) according to any one of the preceding claims.
